# EUROPÄISCHE PATENTANMELDUNG

(11) **EP 2 648 321 A1**
(43) Veröffentlichungstag der Anmeldung: **09.10.2013**
(21) Anmeldenummer: 13160537.0
(22) Anmeldetag: 22.03.2013
(51) Int. Cl.: H02M 1/088, H02M 7/493, B60L 15/04

(54) **Leistungselektronikmodul, Verfahren zur Herstellung**

(30) Priorität: 05.04.2012 DE 102012205725
(71) Anmelder: ROBERT BOSCH GMBH, 70442 Stuttgart (DE)
(72) Erfinder: Wandhammer, Michel, 67770 Dalhunden (FR); Fruhauf, Raphael, 67400 Illkirch-Graffenstaden (FR)

(57) **Zusammenfassung**

Die Erfindung betrifft ein Leistungselektronikmodul (2), insbesondere für eine elektrische Maschine insbesondere eines Kraftfahrzeugs, mit einer ersten wenigstens zwei Halbbrücken (3, 4, 5) aufweisenden Brückenschaltung (1), wobei jede der Halbbrücken (3, 4, 5) ein Highside-Schaltelement (3', 4', 5') und ein Lowside-Schaltelement (3", 4", 5") aufweist, und mit einer Parallelschaltung zur Leistungssteigerung. Es ist vorgesehen, dass alle Ausgänge der Halbbrücken (3, 4, 5) der ersten Brückenschaltung (1) miteinander zu einem ersten Anschluss (A1) verbunden sind, und dass von der ersten Brückenschaltung (1) alle Highside-Schaltelemente (3', 4', 5') mit einer ersten Steuerleitung (S1') und alle Lowside-Schaltelemente (3", 4", 5") mit einer zweiten Steuerleitung (S1") jeweils parallel verbunden sind, wobei mindestens eine zweite Brückenschaltung (9, 10) vorgesehen ist, die wie die erste Brückenschaltung (1) ausgebildet ist, um einen zweiten Anschluss (A9) zu bilden.

Ferner betrifft die Erfindung eine Steuereinrichtung einer elektrischen Maschine, ein System, und ein Verfahren zur Herstellung eines Leistungselektronikmoduls.

## Beschreibung

Die Erfindung betrifft ein Leistungselektronikmodul, insbesondere für eine elektrische Maschine insbesondere eines Kraftfahrzeugs, mit einer ersten wenigstens zwei Halbbrücken aufweisenden Brückenschaltung, wobei jede der Halbbrücken ein Highside-Schaltelement und ein Lowside-Schaltelement aufweist, und mit einer Parallelschaltung zur Leistungssteigerung.

Ferner betrifft die Erfindung eine Steuereinrichtung, insbesondere für eine elektrische Maschine, die eine Ansteuerelektronik und eine Leistungselektronik aufweist, welche voneinander getrennt ausgebildet sind.

Weiterhin betrifft die Erfindung eine elektrische Maschine mit einer derartigen Steuereinrichtung sowie ein System mit einer elektrischen Maschine.

Außerdem betrifft die Erfindung ein Verfahren zur Herstellung des oben beschriebenen Leistungselektronikmoduls.

### Stand der Technik

Zur Ansteuerung elektrischer Maschinen werden üblicherweise sogenannte Wandler mit Halbleiter-Schaltelementen verwendet. Diese erzeugen aus einer Versorgungs-Gleichspannung entweder eine variable reversierbare Gleichspannung zur Ansteuerung von Bürstenmotoren oder eine Wechselspannung mit variabler Amplitude und Frequenz für die Ansteuerung von elektronisch kommutierten Motoren/Maschinen, wie beispielsweise von permanenterregten Synchronmaschinen, elektrisch erregten Synchronmaschinen, Asynchronmaschinen oder Schrittmotoren. Die Wandler-Grundstruktur wird von einer Leistungselektronik oder einem Leistungselektronikmodul gebildet, das mindestens zwei Halbbrücken aufweist, die jeweils ein Highside-Schaltelement und ein Lowside-Schaltelement aufweisen, die von einem Gleichspannungsnetz mit Energie versorgt werden und jeweils einen Ausgang zwischen Highside-Schaltelement und Lowside-Schaltelement aufweisen, welcher mit jeweils einer Phase der elektrischen Maschine verbindbar ist. Durch eine Kombination der Halbbrücken der Brückenschaltung können die meisten Wandler-Topologien, wie beispielsweise eine Voll-Brücke mit zwei Halbbrücken oder eine 86-Brücke mit drei Halbbrücken, gebildet werden.

Für die Leistungsskalierung beziehungsweise -Steigerung ist es bekannt, entweder eine Bestückungsänderung der Brückenschaltung durchzuführen und Bauelemente mit verbesserten Eigenschaften einzusetzen, soweit dies möglich ist, und/oder eine Parallelschaltung der Leistungselektronikmodule vorzusehen, insbesondere wenn die einzelnen Bauteile bereits optimal ausgelegt sind.

Die Parallelschaltung stellt jedoch hohe Anforderungen an die Aufbau- und Verbindungstechnik, damit die elektrische transiente und statische Belastung der parallel geschalteten Schaltelemente gleich verteilt wird. Dabei ist es besonders wichtig, dass die Schaltelemente einer Halbbrücke symmetrisch an einen Zwischenkreis und am jeweiligen Ausgang für den Motorabgriff angebunden werden, bei gleichzeitiger Minimierung der parasitären Widerstände und Induktivitäten der Aufbau- und Verbindungstechnik. Dies führte bisher jedoch zu hohen Enfiniicklungskosten sowie Enfiniicklung- und Herstellungszeiten.

### Offenbarung der Erfindung

Das erfindungsgemäße Leistungselektronikmodul mit den Merkmalen des Anspruchs 1 hat demgegenüber den Vorteil, dass basierend auf der Verwendung eines Basisdesigns eine Leistungsskalierung- beziehungsweise Steigerung auf einfache Art und Weise darstellbar ist. Das erfindungsgemäße Leistungselektronikmodul zeichnet sich dadurch aus, dass alle Ausgänge der Halbbrücken der ersten Brückenschaltung miteinander zu einem ersten Anschluss verbunden sind, und dass von der ersten Brückenschaltung alle Highside-Schaltelemente mit einer ersten Steuerleitung und alle Lowside-Schaltelemente mit einer zweiten Steuerleitung jeweils parallel verbunden sind, wobei mindestens eine zweite Brückenschaltung vorgesehen ist, die wie die erste Brückenschaltung ausgebildet ist, um einen zweiten Anschluss zu bilden. Erfindungsgemäß ist also vorgesehen, dass die Halbbrücken der ersten Brückenschaltung miteinander parallel geschaltet werden. Dazu werden zum einen die Ausgänge der Halbbrücken zu einem ersten Anschluss zusammengeführt, und zum anderen wird gewährleistet, dass alle Highside-Schaltelemente und alle Lowside-Schaltelemente gleichzeitig betätigt werden können. Hierzu werden diese jeweils mit einer zugeordneten Steuerleitung parallel verbunden. Aus den mindestens zwei Halbbrücken der ersten Brückenschaltung wird somit eine erste Halbbrücke gebildet, die einen Sammelausgang, nämlich den Anschluss, aufweist. Durch Vorsehen der zweiten Brückenschaltung, die entsprechend der ersten Brückenschaltung ausgebildet ist, wird eine entsprechende zweite Halbbrücke mit einem zweiten Anschluss zur Verfügung gestellt. Das Leistungselektronikmodul bietet somit wenigstens zwei Anschlüsse, die zum Ansteuern einer elektrischen Maschine genutzt werden können. Die Anzahl der entsprechend gebildeten Brückenschaltungen kann beliebig erhöht werden. Je nach Anzahl der Modulhalbbrücken wird dabei eine entsprechende Wandler-Topologie, beispielsweise eine Voll-Brücke oder eine B6-Brücke, bereitgestellt. Die vorteilhafte Ausbildung erlaubt eine symmetrische Belastung der Bauelemente, insbesondere der Schaltelemente, wobei durch die Hochskalierung die Anforderungen an mechanisch elektrische Komponenten/Bauelemente prinzipiell unverändert bleiben. Darüber hinaus führt die einfache Ausbildung des Leistungselektronikmoduls zu nur geringen Entwicklungs- und Herstellungskosten.

Vorzugsweise ist mindestens eine dritte Brückenschaltung vorgesehen, die wie die erste und die zweite Brückenschaltung ausgebildet ist, um mindestens einen dritten Anschluss zu bilden. Das derart ausgebildete Leistungselektronikmodul ist somit dazu geeignet, eine dreiphasige elektrische Maschine anzusteuern. Durch Vorsehen der dritten Brückenschaltung lässt sich somit auf einfache Art und Weise die Anwendung des Leistungselektronikmoduls für entsprechende Zwecke anpassen beziehungsweise skalieren.

Vorzugsweise ist die jeweilige Brückenschaltung dazu als Halbbrückenmodul ausgebildet. Die Halbbrückenmodule lassen sich auf einfache Art und Weise, insbesondere durch Vorsehen entsprechender mechanischer Verbindungsmittel, miteinander verknüpfen und zu dem Leistungselektronikmodul zusammenfügen. Durch die modulartige Ausbildung wird die Teilevielfalt und der Entwicklungsaufwand reduziert.

Gemäß einer vorteilhaften Weiterbildung der Erfindung ist vorgesehen, dass die Anschlüsse der Brückenschaltungen einen Anschlusskontakt für die anzusteuernde elektrische Maschine bilden, wobei jeder der Anschlüsse mit jeweils einer Phase der elektrischen Maschine verbindbar ist. Der Anschlusskontakt ist besonders bevorzugt als Steckkontakt zur einfachen Anbindung an der elektrischen Maschine ausgebildet. Die Anzahl der Phasen der elektrischen Maschine bestimmt dabei die Anzahl der Brückenschaltungen des Leistungselektronikmoduls.

Bevorzugt sind die Schaltelemente als Halbleiterschalter ausgebildet, insbesondere als MOSFET- oder IGBT-Schalter, wobei zur Gate-Ansteuerung insbesondere mindestens ein Verstärker vorgesehen ist. Der Verstärker stellt sicher, dass trotz erhöhter Anzahl der Schaltelemente für das Leistungselektronikmodul diese auch weiterhin sicher angesteuert werden können. Besonders bevorzugt ist jeder Brückenschaltung ein Verstärker zugeordnet, insbesondere ist jeweils ein Verstärker den Highside-Schaltelementen und den Lowside-Schaltelementen einer Brückenschaltung zugeordnet.

Die erfindungsgemäße Steuereinrichtung mit den Merkmalen des Anspruchs 6 hat den Vorteil, dass zum einen eine hohe Flexibilität durch Trennung von Leistungs- und Ansteuerelektronik gewährleistet wird und zum anderen eine Leistungssteigerung der Leistungselektronik auf einfache Art und Weise erreichbar ist. Die Steuereinrichtung zeichnet sich dadurch aus, dass die Leistungselektronik als Leistungselektronikmodul, wie es oben stehend beschrieben wurde, ausgebildet ist.

Die elektrische Maschine mit den Merkmalen des Anspruchs 7 zeichnet sich durch die Ausbildung der Steuereinrichtung, wie sie oben beschrieben wurde, aus. Somit lässt sich die Steuereinrichtung auf einfache und kostengünstige Art und Weise an die Leistungsanforderungen der elektrischen Maschine anpassen. Das erfindungsgemäße System, das insbesondere als Antriebseinrichtung oder als Kraftfahrzeug ausgebildet ist,mit den Merkmalen des Anspruchs 8 zeichnet sich durch die oben beschriebene elektrische Maschine aus. Insbesondere bei einer Ausbildung der elektrischen Maschine als Antriebsaggregat des Kraftfahrzeugs, beispielsweise im Rahmen einer Hybrid-Antriebsvorrichtung oder als elektrische Antriebsvorrichtung, erlaubt die vorteilhafte Ausbildung des Leistungselektronikmoduls eine einfache und kostengünstige Anpassung der Leistungselektronik an die Leistungsanforderungen der elektrischen Maschine.

Das erfindungsgemäße Verfahren mit den Merkmalen des Anspruchs 9 zeichnet sich dadurch aus, dass alle Ausgänge der Halbbrücken der ersten Brückenschaltung miteinander zu einem ersten Anschluss verbunden werden, und dass von der ersten Brückenschaltung alle Highside-Schaltelemente mit einer ersten Steuerleitung und alle Lowside-Schaltelemente mit einer zweiten Steuerleitung jeweils parallel verbunden werden, wobei mindestens eine zweite Brückenschaltung vorgesehen wird, die wie die erste Brückenschaltung ausgebildet wird, um einen zweiten Anschluss zu bilden. Vorzugsweise wird noch eine dritte Brückenschaltung entsprechend der ersten oder der zweiten Brückenschaltung vorgesehen, so dass drei Anschlüsse zur Verfügung gestellt werden, die beispielsweise jeweils mit einer Phase einer dreiphasigen elektrischen Maschine verbindbar sind oder verbunden werden. Weitere Vorteile und Ausführungsformen ergeben sich aus dem zuvor Beschriebenen.

Im Folgenden soll die Erfindung anhand der Zeichnungen näher erläutert werden. Dazu zeigen
- Figur 1: eine vorteilhafte Brückenschaltung eines Leistungselektronikmoduls in einer vereinfachten Darstellung,
- Figur 2: eine Steuereinrichtung mit mehreren Leistungselektronikmodulen,
- Figuren 3A und 3B: Ausführungsbeispiele vorteilhafter Brückenschaltungen des Leistungselektronikmoduls und
- Figuren 4A und 4B: Steuereinrichtungen mit den Leistungselektronikmodulen aus Figuren 3A und 3B.

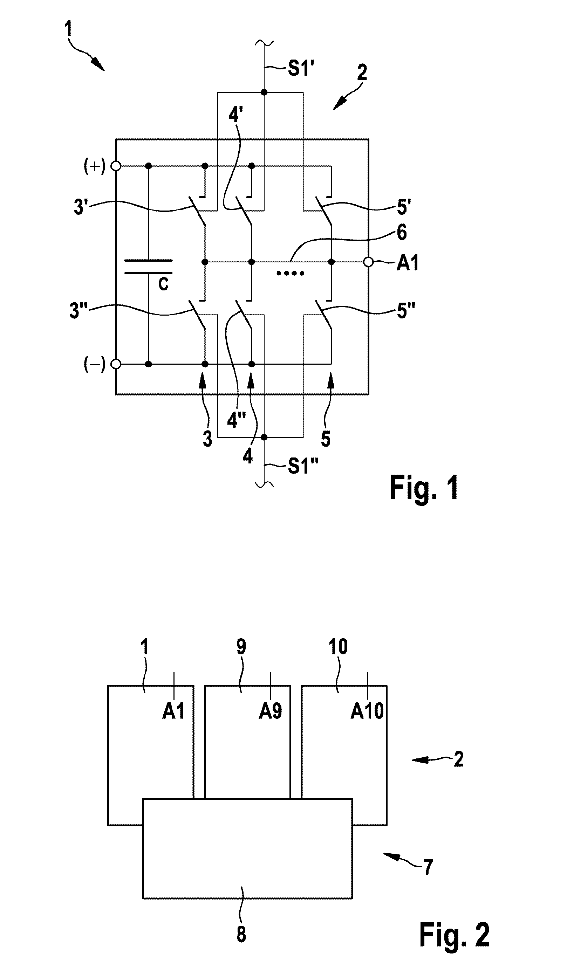

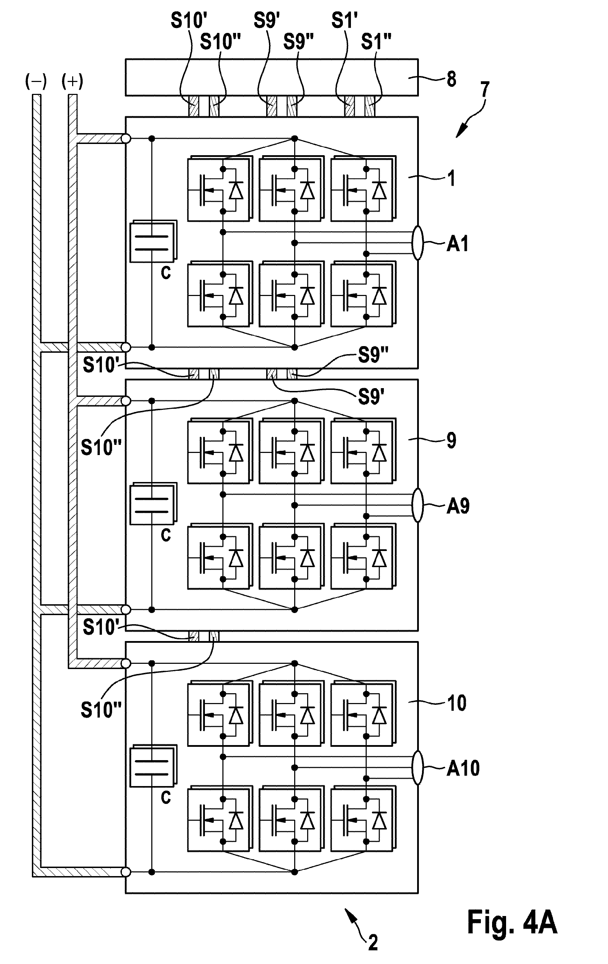

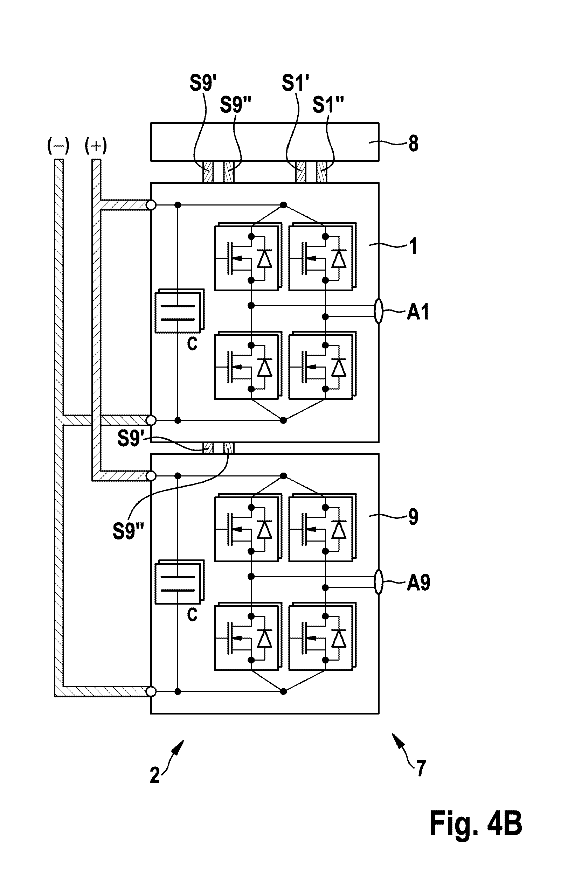

Figur 1 zeigt ein Schaltbild einer Brückenschaltung 1 eines Leistungselektronikmoduls 2. Die Brückenschaltung 1 weist mehrere Halbbrücken 3, 4 und 5 auf. Die Pünktchen in Figur 1 sollen jedoch andeuten, dass prinzipiell auch mehr als nur drei Halbbrücken vorgesehen sein können. Jede der Halbbrücken 3 bis 5 weist ein Highside-Schaltelement 3' 4' beziehungsweise 5' und ein Lowside-Schaltelement 3", 4" und 5" auf. Die Schaltelemente einer Halbbrücke 3, 4 und 5 sind dabei in Reihe zwischen Versorgungsanschlüssen (+) und (-) und parallel zu einem optionalen Zwischenkreiskondensator C geschaltet. Die Ausgänge der Schaltelemente sind dabei alle mit einer Anschlussleitung 6 verbunden, die zu einem ersten Anschluss A1 führt. Die Schaltelemente 3' bis 5' der Brückenschaltung 1 sind als Halbleiterschaltelemente ausgebildet. Die Source-Anschlüsse sind dabei mit der jeweiligen Versorgungsspannung und die Drain-Anschlüsse beziehungsweise Ausgänge mit der Anschlussleitung 6 verbunden. Zum Ansteuern beziehungsweise Betätigen der Schaltelemente sind Steuerleitungen, wie auch in Figuren 4A und 4B gezeigt, vorgesehen, die mit einer Ansteuerelektronik verbindbar sind. Die Brückenschaltung 1 ist dabei derart ausgebildet, dass die Highside-Schatlelemente 3', 4' und 5' parallel mit einer ersten Steuerleitung S1' und die Lowisde-Schaltelemente 3", 4" und 5" parallel zueinander mit einer zweiten Steuerleitung S1" verbunden sind. Die beiden Steuerleitungen S1', S1" sind entsprechend mit der Ansteuerelektronik wie unten beschrieben verbindbar/verbunden. Wird also ein Ansteuersignal auf die erste Steuerleitung gesetzt, so werden alle Higside-Schaltelemente 3', 4' und 5' betätigt, für die Lowside-Schaltelemente 3", 4" und 5" gilt dasselbe. Insofern sind die Highside-Schaltelemente 3' bis 5' und die Lowside-Schaltelemente 3" bis 5" jeweils parallel zueinander geschaltet und mit der gemeinsamen Anschlussleitung 6 verbunden.

Figur 2 zeigt in einer vereinfachten Darstellung eine mittels des Leistungselektronikmoduls 2 gebildete Steuereinrichtung 7. Die Steuereinrichtung 7 umfasst eine Ansteuerelektronik 8, die insofern eine Logikeinheit bildet, sowie die damit verbundene Brückenschaltung 1 beziehungsweise das damit verbundene Leistungselektronikmodul 2. Zusätzlich zu der Brückenschaltung 1, die insofern eine erste Brückenschaltung darstellt, sind noch eine zweite Brückenschaltung 9 sowie eine dritte Brückenschaltung 10 mit der Ansteuerelektronik 8 verbunden. Die Brückenschaltungen 9 und 10 sind identisch zu der Brückenschaltung ausgebildet und bilden zusammen das Leistungselektronikmodul 2. Die Brückenschaltungen 9 und 10 weisen insofern ebenfalls Anschlüsse A9 und A10 auf, die dem Anschluss A1 entsprechen. Die drei Anschlüsse A1, A9 und A10 sind mit den drei Phasen einer anzusteuernden elektrischen Maschine verbindbar. Durch die Parallelschaltung der jeweiligen Schalterelemente der Brückenschaltungen 1, 9 und 10 stellen die Brückenschaltungen 1, 9 und 10 jeweils ein Halbbrückenmodul dar. Werden, wie in dem Ausführungsbeispiel von Figur 2 vorgeschlagen, drei derartiger Halbbrückenmodule miteinander verknüpft, entsteht das Leistungselektronikmodul 2 mit drei Halbbrückennmodulen und bildet insofern einen B6-Wandler.

Die Trennung von Ansteuerelektronik 8 und Leistungselektronikmodul 2 beziehungsweise der Leistungselektronik ermöglicht es, die Leistungselektronik mittels der vorgeschlagenen Brückenschaltung 1 auf einfache Art und Weise zu skalieren beziehungsweise in ihrer möglichen Leistung zu beeinflussen/zu erweitern. Das Leistungselektronikmodul 2 kann dabei optimal an Bauraum, Kosten, elektrische Funktion sowie Symmetrie angepasst werden. Insbesondere sind die Brückenschaltungen 1, 9 und 10 für die geringste abzudeckende Leistungsklasse ausgebildet, wodurch sie ein Basismodul darstellen. Durch Hinzufügen weiterer entsprechender Basismodule beziehungsweise Halbbrückenmodule gemäß Brückenschaltung 1 entsteht die vollständige Brücke der Leistungselektronik, wie mit Bezug auf Figur 2 beschrieben, mit einer gewünschten Anzahl von Halbbrücken. Hierdurch lässt sich eine leichte Bestückungsänderung zur Modifikation der Leistung mit n Halbbrücken in der Grundstruktur mit der n-fachen Stromtragfähigkeit durch Parallelschaltung der n Halbbrücken erreichen. Die Steuereinrichtung 7 weist im ersten Ausführungsbeispiel von Figur 2 insofern ein Leistungselektronikmodul 2 mit n=3 Halbbrücken beziehungsweise Modulhalbbrücken auf, mit zwei Leistungseingängen (Versorgungsspannungen) und n-Leistungsausgängen beziehungsweise Anschlüssen A1, A9 und A10.

Die Anschlüsse A1, A9 und A10 sind vorzugsweise als Steckanschlüsse ausgebildet oder indirekt durch auf einer Leiterplatte vorgesehene Leiterbahnen oder Stanzgitter mit einem Energiespeicher oder der elektrischen Maschine verbunden. Der Basisträger für das Leistungselektronikmodul 2 ist vorzugsweise als gedruckte Leiterplatte, als IMS, als Moldmodul, als Stanzgitter oder als geschlossenes System ausgebildet. Die einzelnen Bauelemente, insbesondere die Schaltelemente, Zwischenkreiskondensatoren oder Strommessvorrichtungen, werden für die Erfüllung der Leistungsanforderungen ausgewählt. Jedes Bauelement kann dabei aus einem oder mehreren Bauteilen bestehen. Bei der Verdrahtung der jeweiligen Brückenschaltung 1, 9, 10 wird auf Reduzierung der parasitären Widerstände und Induktivitäten geachtet, und zusätzlich auf Symmetrie der Brückenschaltungen 1, 9, 10 insbesondere bezüglich Anbindung der Schaltelemente zum Zwischenkreis und zum Motorausgang.

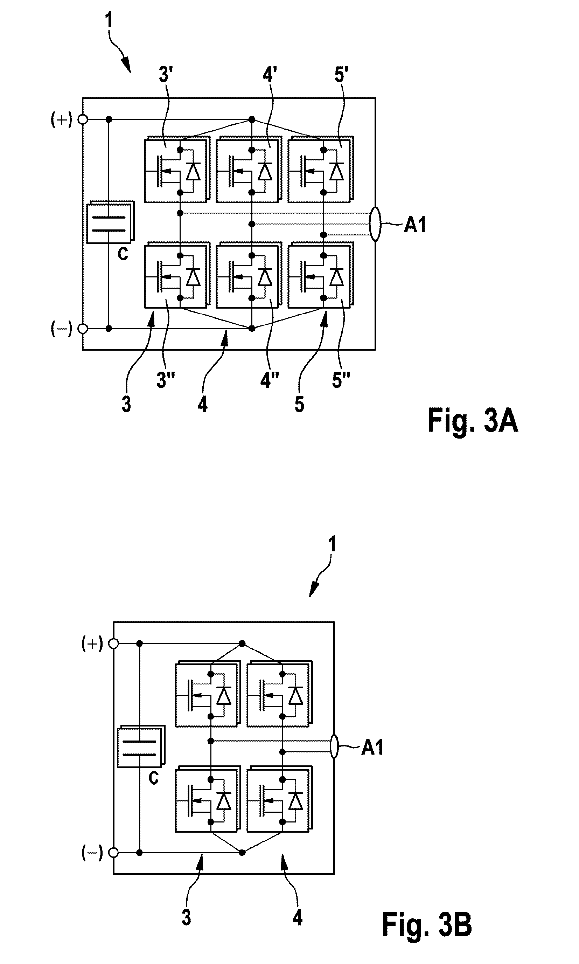

Figuren 3A und 3B zeigen detailiertere Ausführungsbeispiele der Brückenschaltung 1. So zeigt Figur 3A ein Ausführungsbeispiel, bei welchem die Brückenschaltung 1 aus den drei Halbbrücken 3, 4 und 5 gebildet ist, deren Ausgänge mit dem Anschluss A1 verbunden sind. Anstelle einer gemeinsamen Anschlussleitung 6 gemäß Figur 1 sind dabei die Halbbrücken jeweils mit einer eigenen Anschlussleitung mit dem Anschluss A1 verbunden, wobei sie an dem Anschluss A1 zusammengeführt werden, der insofern die gemeinsame Anschlussleitung bildet. Wie aus Figur 3A deutlich ersichtlich, sind die Highside-Schaltelemente 3', 4' und 5' mit einer Versorgungsspannung (+) und die Lowside-Schaltelemente 3", 4" und 5" mit der anderen Versorgungsspannung (-) jeweils parallel verbunden. Wie zuvor erwähnt, sind ebenfalls die Gate-Anschlüsse der Highside-Schaltelemente 3', 4' und 5' mit einer gemeinsamen ersten Steuerleitung und die Gate-Anschlüsse der Lowside-Schaltelemente 3", 4" und 5" mit einer zweiten Steuerleitung verbunden, die zu der Ansteuerelektronik 8 führen (hier nicht dargestellt). Figur 3B zeigt ein zweites Ausführungsbeispiel, bei welchem die Brückenschaltung 1 aus nur zwei Halbbrücken 3 und 4 gebildet wird. Die Parallelschaltung der Schaltelemente entspricht jedoch der zuvor beschriebenen. Die Leistung der so gebildeten Brückenschaltung 1 fällt jedoch entsprechend geringer aus. Der Aufbau der Brückenschaltung 1 gemäß Figur 3A entspricht insoweit einer B6-Brücke, während der Aufbau der Brückenschaltung 1 gemäß Figur 3B einer B4- oder H-Brücke entspricht, abgesehen von den zuvor beschriebenen Parallelschaltungen. Figuren 4A und 4B zeigen unterschiedliche Ausbildungen der Steuereinrichtung 7 gemäß den Ausführungsbeispielen aus Figuren 3A und 3B.

Figur 4A zeigt die Steuereinrichtung 7 mit dem eine B6-Brücke bildenden Leistungselektronikmodul 2, das mit der Ansteuerelektronik 8 wie zuvor beschrieben verbunden ist. Figur 4A zeigt insoweit die in Figur 2 bereits beschriebene Ausführungsform der Steuereinrichtung 7 in detaillierter Darstellung. Die Anschlüsse A1, A9 und A10 sind dabei zweckmäßigerweise mit den Phasen U, V und W der anzusteuernden elektrischen Maschine verbunden. Den Brückenschaltungen 9 und 10 sind den Steuerleitungen S1' und S1" entsprechende Steuerleitungen S9' und S9", S10' und S10" zugeordnet, mittels welcher die jeweiligen Highside-Schaltelemente beziehungsweise Lowside-Schaltelemente parallel geschaltet beziehungsweise betätigt werden können.

Entsprechend gilt für das Ausführungsbeispiel gemäß Figur 4B, bei welchem Steuereinrichtung 7 ein Leistungselektronikmodul 2 mit nur zwei Brückenschaltungen 1 und 9 aufweist, dass die Anschlüsse A1 und A9 mit der entsprechenden Phase der elektrischen Maschine oder eines anderen Verbrauchers verbunden sind.

Für die Gate-Ansteuerung und aufgrund der erhöhten Anzahl der anzusteuernden Schaltelemente wird vorteilhafterweise prinzipiell eine zusätzliche Verstärkerstufe vorgesehen, die beispielsweise als Bestückungsoption der Basisbrücke beziehungsweise der Brückenschaltung 1, 9 beziehungsweise 10 vorgehalten wird. Alternativ wird die Verstärkerstufe, die aus einem oder mehreren Verstärkern gebildet sein kann, in der Ansteuerelektronik integriert.

Zur Bildung eines Leistungselektronikmoduls für eine Leistung n*P werden somit n Brückenschaltungen der Brückenschaltung 1 verwendet. Jede Brückenschaltung 1 steuert eine Phase der elektrischen Maschine an. Eine Skalierung zwischen n und 1 kann durch Bestückungsänderungen des Designs für n*P erzielt werden, zum Beispiel durch Weglassen von Leistungsbauelementen oder durch Verwendung von Bauelementen mit reduzierter Performance, was zu einer Reduzierung der Leistung P der jeweiligen Brückenschaltung führt. Eine Hochskalierung mit dem Faktor 2n, 3n, 4n ist prinzipiell durch Parallelschaltung der Brückenschaltung 1 gemäß n*P möglich, wobei die Symmetrie der einzelnen Module zueinander eingehalten werden muss. Durch die Trennung der Leistungselektronik von der Ansteuerelektronik 8, ist eine Skalierung der Ansteuerelektronik hardware- oder softwareseitig ohne Beeinflussung der Leistungselektronik möglich.

Zur Skalierung der Leistung wird vorliegend also das Leistungselektronikmodul von "Brücke mit n-Halbbrücken" in "Halbbrücke mit n-Parallelzweigen" geändert. Durch Wiederverwendung dieser Brückenschaltungen wird der Wandler mit der n-fachen Leistung realisiert.

Hierdurch wird erreicht, dass die einzelnen Bauelemente symmetrisch belastet werden, sofern dies im Betrieb in der jeweiligen Brückenschaltung 1 berücksichtigt wird. Durch eine Hochskalierung bleiben Anforderungen an mechanisch elektrische Komponenten des Basismoduls bis zu der Basisbrückenschaltung 1 unverändert. Durch den modularen Aufbau, kann das mechanische Design, beispielsweise bezüglich Gehäuse oder Stromführung, für Eck-Leistungsklassen optimiert werden.

## Patentansprüche

1. Leistungselektronikmodul (2), insbesondere für eine elektrische Maschine insbesondere eines Kraftfahrzeugs, mit einer ersten wenigstens zwei Halbbrücken (3, 4, 5) aufweisenden Brückenschaltung (1), wobei jede der Halbbrücken (3, 4, 5) ein Highside-Schaltelement (3', 4', 5') und ein Lowside-Schaltelement (3", 4", 5") aufweist, und mit einer Parallelschaltung zur Leistungssteigerung, **dadurch gekennzeichnet, dass** alle Ausgänge der Halbbrücken (3, 4, 5) der ersten Brückenschaltung (1) miteinander zu einem ersten Anschluss (A1) verbunden sind, und dass von der ersten Brückenschaltung (1) alle Highside-Schaltelemente (3', 4', 5') mit einer ersten Steuerleitung (S1') und alle Lowside-Schaltelemente (3", 4", 5") mit einer zweiten Steuerleitung (S1") jeweils parallel verbunden sind, wobei mindestens eine zweite Brückenschaltung (9, 10) vorgesehen ist, die wie die erste Brückenschaltung (1) ausgebildet ist, um einen zweiten Anschluss (A9) zu bilden.

2. Leistungselektronikmodul nach Anspruch 1, **dadurch gekennzeichnet, dass** mindestens eine dritte Brückenschaltung (10) vorgesehen ist, die wie die erste und die zweite Brückenschaltung (1, 9) ausgebildet ist, um mindestens einen dritten Anschluss (A10) zu bilden

3. Leistungselektronikmodul nach einem der vorhergehenden Ansprüche, **dadurch gekennzeichnet, dass** die Anschlüsse (A1, A9, A10) der Brückenschaltungen (1, 9, 10) einen Anschlusskontakt für die anzusteuernde elektrische Maschine bilden, wobei jeder der Anschlüsse (A1, A9, A10) mit jeweils einer Phase der elektrischen Maschine verbindbar ist.

4. Leistungselektronikmodul nach einem der vorhergehenden Ansprüche, **dadurch gekennzeichnet, dass** die Schaltelemente (3'; 4', 5', 3", 4", 5") als Halbleiterschalter ausgebildet sind, wobei zur Gate-Ansteuerung insbesondere mindestens ein Verstärker vorgesehen ist.

5. Leistungselektronikmodul nach einem der vorhergehenden Ansprüche, **dadurch gekennzeichnet, dass** die jeweilige Brückenschaltung (1, 9, 10) als Halbbrückenmodul ausgebildet ist.

6. Steuereinrichtung (7), insbesondere für eine elektrische Maschine, mit einer Ansteuerelektronik (8) und mit einer Leistungselektronik, die voneinander getrennt ausgebildet sind, **gekennzeichnet durch** die Ausbildung der Leistungselektronik als Leistungselektronikmodul (2) nach einem oder mehreren der vorhergehenden Ansprüche.

7. Elektrische Maschine, insbesondere für ein Kraftfahrzeug, mit einer Steuereinrichtung (7) zum Betreiben der elektrischen Maschine durch Bestromen ihrer Phasen, **gekennzeichnet durch** die Ausbildung der Steuereinrichtung (7) nach Anspruch 6.

8. System, insbesondere Antriebseinrichtung oder Kraftfahrzeug, mit einer elektrischen Maschine, die insbesondere als Antriebsaggregat ausgebildet ist, **gekennzeichnet durch** die Ausbildung der elektrischen Maschine nach Anspruch 7.

9. Verfahren zur Herstellung eines Leistungselektronikmoduls (2), insbesondere nach einem der Ansprüche 1 bis 5, insbesondere für eine elektrische Maschine insbesondere eines Kraftfahrzeugs, wobei das Leistungselektronikmodul (2) mindestens eine erste wenigstens zwei Halbbrücken (3, 4, 5) aufweisende Brückenschaltung (1) aufweist, wobei jede Halbbrücke (3, 4, 5) ein Highside-Schaltelement (3', 4', 5') und ein Lowside-Schaltelement (3", 4", 5") aufweist, und wobei zur Leistungssteigerung eine Parallelschaltung hergestellt wird, **dadurch gekennzeichnet, dass** alle Ausgänge der Halbbrücken (3, 4, 5) der ersten Brückenschaltung (1) miteinander zu einem ersten Anschluss (A1) verbunden werden, und dass von der ersten Brückenschaltung (1) alle Highside-Schaltelemente (3', 4', 5') mit einer ersten Steuerleitung (S1') und alle Lowside-Schaltelemente (3", 4", 5") mit einer zweiten Steuerleitung (S1") jeweils parallel verbunden werden, wobei mindestens eine zweite Brückenschaltung (9, 10) vorgesehen wird, die wie die erste Brückenschaltung (1) ausgebildet wird, um einen zweiten Anschluss (A9, A10) zu bilden.
